(19) Europäisches Patentamt
European Patent Office
Office européen des brevets

(11) Publication number: **0 008 153**
**B1**

(12) # EUROPEAN PATENT SPECIFICATION

(45) Date of publication of patent specification: **16.03.83**

(51) Int. Cl.³: **E 21 B 43/22**

(21) Application number: **79300875.6**

(22) Date of filing: **18.05.79**

(54) **Process for recovering oil from subterranean oil-bearing formations and an emulsion useful therein.**

(30) Priority: **14.08.78 US 933225**

(43) Date of publication of application:
**20.02.80 Bulletin 80/4**

(45) Publication of the grant of the patent:
**16.03.83 Bulletin 83/11**

(84) Designated Contracting States:
**DE FR GB IT NL**

(56) References cited:
**US - A - 3 400 761**
**US - A - 3 783 944**
**US - A - 3 921 733**
**US - A - 4 022 731**
**US - A - 4 034 809**

(73) Proprietor: **AMERICAN CYANAMID COMPANY**
**Berdan Avenue**
**Wayne New Jersey 06904 (US)**

(72) Inventor: **Frank, Simon**
**24 Hazelwood Lane**
**Stamford Connecticut (US)**
Inventor: **Schmitt, Joseph Michael**
**41 Knollwood Road**
**Ridgefield Connecticut (US)**
Inventor: **Coscia, Anthony T.**
**17 Woodchuck Court**
**South Norwalk Connecticut (US)**

(74) Representative: **Allam, Peter Clerk et al,**
**LLOYD WISE, TREGEAR & CO. Norman House**
**105-109 Strand**
**London WC2R 0AE (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 008 153 B1

Courier Press, Leamington Spa, England

# Process for recovering oil from subterranean oil-bearing formations and an emulsion useful therein

The present invention relates to the secondary recovery of oil from subterranean oil-bearing formations. More particularly, it relates to an improved water flooding process utilizing an emulsion of a copolymer of acrylamide and ammonium acrylate, and to the emulsion itself.

Water flooding techniques are well known to increase the yield of a partially depleted oil bearing formation. One such technique is to introduce various viscosity-increasing additives into an aqueous water-flooding medium. Attention is directed to United States Patent No. 4,034,809 which discloses the use of certain hydrolyzed water-in-oil emulsions as additives to water-flooding media. In United States Patent No. 3,921,733 improvements in the secondary recovery of oil are claimed for the use of certain aqueous gels which may comprise high molecular weight copolymers of polyacrylamide with, for example, acrylic acid and its salts such as the ammonium salt, in combination with a water-soluble compound of a polyvalent metal which can be reduced to a lower polyvalent valence state and a reducing agent capable of effecting reduction of the polyvalent metal to its lower valence state. The function of these aqueous gels is to decrease the mobility of the drive fluid, such as water, or to decrease the permeability of non-fractured porous formations prior to or during secondary recovery operations.

Unfortunately, the addition of viscosity-increasing additives such as taught in U.S. Patent Nos. 4,034,809 and 3,921,733, *supra,* is not wholly satisfactory since significant increases in oil yield are not uniformly obtained.

U.S. Patent No. 4,022,731 discloses freeze-thaw stable, self-inverting water-in-oil emulsions comprising an aqueous phase of a polymer of acrylamide, a hydrocarbon oil, a water-in-oil emulsifying agent and an inverting surfactant mixture. These emulsions are said to be useful as flocculants. Although these emulsions are, in composition terms, quite closely related to those employed in the present invention, they do not contain acrylamide-ammonium acrylate copolymers of the type employed herein. It is found that the proper choice of copolymer is critical if the emulsions are to be sucessfully employed in the secondary recovery of oil, an application which is not in any way taught or suggested in the reference.

Thus, if an additive could be provided to increase oil production significantly, such would meet a need long sought for in the art.

To these ends, it has been unexpectedly found that superior flow properties leading to enhanced oil recovery are attained by utilizing certain acrylamide/ammonium acrylate copolymers, hereinafter defined, as an additive in a water-flooding medium.

According to the process of the invention, there is provided a process for recovering oil from subterranean oil-bearing formations which comprises introducing through a well bore into the latter formations an aqueous flooding menstruum comprising an acrylamide-ammonium acrylate copolymer having a molecular weight above one million and being prepared in the form of an emulsion comprising:

*(1)* an aqueous phase ranging from 70% to 95%, by weight, based on the total weight of *(1)* and *(2)* which is comprised of:

(a) a water-soluble copolymer having a molecular weight above one million of acrylamide and ammonium acrylate in an amount ranging from 27% to 68% of said copolymer, by weight, based on said aqueous phase, wherein said copolymer consists essentially of 50% to 75% acrylamide, by weight, and from 25% to 50% ammonium acrylate, by weight, said acrylate being derived from the substantially complete neutralization of acrylic acid with ammonia or ammonium hydroxide, and

(b) water in an amount ranging from 32% to 73%, by weight, based on the total weight of *(1)*,

*(2)* a liquid hydrocarbon oil in an amount ranging from 5% to 30%, by weight, based on the total weight of *(1)* and *(2)*,

*(3)* a water-in-oil emulsifying agent disposed between said aqueous phase and said liquid hydrocarbon at a concentration of 0.1% to 15.0%, by weight, based on the total weight of *(1)*, *(2)* and *(3)*, and optionally,

*(4)* an inverting hydrophilic surfactant of an ethoxylated octyl or an ethoxylated nonyl phenol, the amount of said ethoxylated octyl or nonyl phenol ranging from 1.5% to 2.5% by weight, said weight being based on the total weight of *(1)*, *(2)*, *(3)* and *(4)*.

The present invention also provides an emulsion adapted for use in the recovery of oil from subterranean oil-bearing formulations which comprises:

*(1)* an aqueous phase ranging from 70% to 95%, by weight, based on the total weight of *(1)* and *(2)* which is comprised of:

(a) a water-soluble copolymer having a molecular weight of above one million of acrylamide and ammonium acrylate in an amount ranging from 27% to 68% of said copolymer, by weight, based on said aqueous phase, wherein said copolymer consists essentially of from 50% to 75% acrylamide, by weight, and from 25% to 50% ammonium acrylate, by weight, said acrylate being derived from the substantially complete neutralization of acrylic acid with ammonia or ammonium hydroxide, and

(b) water in an amount ranging from 32% to 73%, by weight, based on the total weight of (1),

(2) a liquid hydrocarbon oil in an amount ranging from 5% to 30%, by weight, based on the total weight of (1) and (2),

(3) a water-in-oil emulsifying agent disposed between said aqueous phase and said liquid hydrocarbon at a concentration of 0.1% to 15.0%, by weight, based on the total weight of (1), (2) and (3), and optionally,

(4) an inverting hydrophilic surfactant of an ethoxylated octyl or an ethoxylated nonyl phenol, the amount of said ethoxylated octyl or nonyl phenol ranging from 1.5% to 2.5%, by weight, said weight being based on the total weight of (1), (2), (3) and (4).

As can be seen, the aqueous phase of the useful emulsions is comprised of an acrylamide copolymer and water. The copolymer comprises acrylamide containing from 50% to 75% of acrylamide and 25% to 50% of ammonium acylate or an ammonium acrylate/acrylic acid mixture, wherein the ammonium acrylate is at least 75% of the mixture.

In a preferred embodiment, the acrylamide with the comonomer, is dissolved in water to attain the desired solids concentration. A suitable chelating agent, such as ethylene-diaminetetraacetic acid disodium salt is then added to chelate metal ions which may be present in the system, such as that which may have been incorporated into the acrylamide during its production. Neutralization of the acrylic acid with ammonia follows. The oxidant part of a redoc catalyst system as discussed below is preferably added to the aqueous phase at this time, or later as described below.

After the aqueous phase has been formed as above, it is homogenized into the oil phase which, at this time, constitutes a solution of the oil and a water-in-oil emulsifier. Any known oil for this purpose may be used. A preferred oil useful for this purpose is a commercially available product sold under the trademark AMSCO OMS by the Union Oil Company of California. It is a clear, oily liquid comprising approximately 86.9% paraffins, 13.0% naphthenes and 0.1% aromatics. It has a molecular weight of about 170, a specific gravity of 0.755 at 60°F, a viscosity of $1.4 \times 10^{-3}$ $Nsm^{-2}$ (1.4 cps) at 25°C (77°F), a freezing point below −31.7°C (−25°F), a boiling point of 204°C (399°F), a flash point of 52.2°C (126°F) and is insoluble in water. Its specific heat is 0.526 kJ/8.9°C (0.499 BTU/16°F) at 37.8°C (100°F) and 0.620 kJ/8.9°C (0.588 BTU/16°F) at 93.3°C (200°F).

Any available water-in-oil emulsifier may be employed, particularly those set forth in U.S. Patent No. 4,022,731. A preferred emulsifier is sorbitan monooleate.

After the water-in-oil emulsion is formed by agitation of the oil and water phases to insure uniform blending, the oxidant part of the redoc catalyst system may be added, if it had not been added previously as described above. This ingredient is added as an aqueous solution to the monomer emulsion i.e., from 10 parts to 1000 parts per million parts of monomers, preferably 25—250 ppm. Any redoc catalyst system can be used herein such as the bromate-sulfite system; the peroxide-sulfite system; the hydroperoxide-bisulfite system, etc. Additionally, other free-radical catalyst systems can be employed, e.g. azobisisobutyronitrile, benzoyl peroxide, lauroyl peroxide, potassium persulfate and the like as is known in the art. When the single component catalyst systems are employed, they are not added to the monomer emulsion until conversion of the monomers to polymer is desired. In the preferred aspect of this invention, however, the oxidant portion of a redox catalyst system, t-butyl hydroperoxide is added to the monomer emulsion first. The reducing portion of the redox catalyst should be employed in amounts ranging from 10 ppm to 500 ppm based on monomers, preferably 50—250 ppm.

Advantageously, there are added small amounts of propylene glycol, usually from 0.1% to 10%, based on total monomer, to both stabilize and control the molecular weight of resultant copolymer. For instance, when adding a high percentage of propylene glycol, there is obtained a lowering of the molecular weight of the resultant copolymer.

After the reaction mixture is prepared in the above manner, the system is then sparged with nitrogen gas to remove all oxygen from the system and the reducing portion of the catalyst system is then pumped into the monomer emulsion containing the oxidant portion of the catalyst over a period of from 1 to 20 hours; i.e. until substantially complete conversion is accomplished, preferably about 4—16 hours, the longer times being necessitated by heat exchange capacity and by the lower concentration of catalyst. The temperature of the reaction medium should be maintained at from 25°C. to 55°C. Resultant copolymers possess a molecular weight above one million and are characterized as having a viscosity of from $3 \times 10^{-3}$ to $6 \times 10^{-3}$ $Nsm^{-2}$ (3 to 6 centipoises) for a 0.4% solution in 1N sodium chloride at pH8.0, the viscosity being obtained using a Brookfield viscosimeter equipped with a U.L. adapter, and employing spindle speed of 60 rpm.

In general, the inversion of the emulsion preferably employed in the present invention can be accomplished by the addition of water only, when inverting surfactant is present. Alternatively, the inversion can be also accomplished by adding the above-described inverting surfactant to a water emulsion mixture.

The hydrophilic ethoxylated octyl or nonyl phenol useful as the inverting surfactant comprises the reaction product of about one mole of octyl or nonyl phenol with from 5—10 moles, preferably from 6 to 8 moles, of ethylene oxide. Resultant ethoxylated octyl or nonyl phenol is employed in amounts

ranging from 1.5% to 2.5% by weight, preferably about 2.0% by weight, based on the total weight of the emulsion, i.e. components (1), (2), (3) and (4), above.

The following examples are set forth for purposes of illustrating the invention. All parts and percentages are by weight unless otherwise specified.

Example 1

This example illustrates the preparation of acrylamideammonium acrylate monomer emulsion.

To a suitable reaction vessel are added 1729 parts of acrylamide, as a 50.6% aqueous solution, 376.5 parts of glacial acrylic acid (99.6%) and 350 parts of deionized water. To the resultant solution are added 954.5 parts of ammonium hydroxide (29.1% $NH_3$) yielding a solution having a pH of 6.8. To this solution are added 44.5 parts of a 5.6% aqueous solution of the disodium salt of ethylenediaminetetraacetic acid and 156.5 parts of water. This mixture constitutes the aqueous monomer solution.

There is next prepared the oil phase by dissolving 109.5 parts of sorbitan monooleate in 1200 parts of AMSCO OMS, a commercially available clear oily liquid sold by Union Oil Co. of California.

The oil phase is stirred at high speed in a suitable vessel and the aqueous monomer solution as prepared above is slowly added thereto yielding a water-in-oil emulsion. This emulsion is further homogenized by passage through an homogenizer at a gauge pressure of $2.4 \times 10^3$ $kNm^{-2}$ (350 psig). Resultant monomer emulsion has a viscosity of 0.55 $Nsm^{-2}$ (550 centipoises) and a dispersed phase particle size of about 2.5 microns or less.

Examples 2—5

These examples illustrate the polymerisation of the monomer emulsion prepared in Example 1.

To a suitable reaction vessel equipped with agitator, thermometer, gas inlet and outlet tubes, are added 806 parts of the above-prepared emulsion. The stirrer is started and 150 parts per million (based on total monomer) of t-butyl hydroperoxide catalyst are added to 100 parts of water. As set forth in the following table, varying amounts of propylene glycol are then added for the control molecular weight.

TABLE I

| | Amt. of Added Propylene Glycol |
|---|---|
| Example 2 | 11.0 |
| Example 3 | 6.6 |
| Example 4 | 2.2 |
| Example 5 | <1.0 |

Resultant reaction medium is sparged with nitrogen gas to remove oxygen from the system. Stirring is continued and sodium metabisulfite solution (2.2 parts in 500 parts of water) is slowly pumped into the vessel over a period of five hours while maintaining the temperature at about 50°C, after which about 136 parts per million (based on monomer) of bisulfite are added. Resultant viscous emulsion exhibits a greater than 99% conversion of acrylamide and ammonium acrylate. Further stabilization of the copolymer emulsion is accomplished by the addition with stirring of concentrated ammonium hydroxide (29.1% $NH_3$) to raise the emulsion pH to about 8.5.

Sufficient ethoxylated nonyl phenol inverting agent (2.5%) as above defined can be added with agitation over a period of 30 minutes to the above polymer emulsions.

Resultant copolymers are characterized by having molecular weights of at least $4 \times 10^6$ and being further defined by a viscosity as summarized in the table below:

TABLE II

| Polymer | Viscosity in $Nsm^{-2}$ (in cps*) | Mol. weight |
|---|---|---|
| A (Ex. 2) | (3.3) $3.3 \times 10^{-3}$ | $4 \times 10^6$ |
| B (Ex. 3) | (4.4) $4.4 \times 10^{-3}$ | $7 \times 10^6$ |
| C (Ex. 4) | (5.2) $5.2 \times 10^{-3}$ | $10 \times 10^6$ |
| D (Ex. 5) | (6.0) $6.0 \times 10^{-3}$ | $15 \times 10^6$ |

*Cps means centipoises as measured for a 0.4% solution in 1N sodium chloride at pH=8 by means of a Brookfield viscosimeter, UL adapter, spindle speed: 60 rpm.

Example 6

To demonstrate the effectiveness of the hereinabove described emulsions as water flooding additives, filtration-rate tests are carried out with the polymer solutions of Examples 2 to 5 employing a synthetic brine as the solvent.

In each of the tests, 2000 parts per million of emulsion polymer are added to the brine solvent and the solution is pumped through individual 47 millimeter diameter filter membranes usually of 0.8 or 1 micron, at a constant pressure of 34 $kNm^{-2}$ (five pounds per square inch). The rate of passage of the solvent and polymer mixture is determined by collecting approximately 100 ml of filtrate and measuring the cumulative filtrate volume against time. The data obtained is summarized in Table III below as follows:

TABLE III

| Composition | Rate (ml/min) |
|---|---|
| Ex. 2 (Polymer A) | 91 |
| Ex. 3 (Polymer B) | 56 |
| Ex. 4 (Polymer C) | 19 |
| Ex. 5 (Polymer D) | 8 |

Example 7

The procedure of Example 6 is repeated except that hydrolyzed polyacrylamide, rather than acrylamide ammonium acrylate copolymer as hereinabove defined is employed. The rate is markedly inferior, less than 4 ml/min. initially with plugging of the membrane pores occurring after only 50 ml or less, of filtrate have been collected.

Example 8

Tests are carried out to define injectivity and mobility control properties in oil reservoir rock by injecting copolymer solutions of Examples 2 and 4 into Berea sandstone core plugs. The one-inch diameter x one-inch long core plugs are initially fired in a muffle furnace at 538°C (1000°F) for a period of four hours to stabilize the clays and clay-type minerals. Air permeability and porosity are determined on the dry plugs. Each plug is then evacuated and saturated with an injection brine containing 3625 ppm. sodium chloride and 375 ppm. calcium chloride. All flow tests are performed at ambient temperature (23°C) and a flow rate of 0.9 m/day (3.0 ft/day). Liquid brine permeabilities for each plug are measured using the invention brine. Solutions of the polymer emulsion of Examples 2 and 4 comprising 500 ppm. copolymer in injection brine are then injected and the volumetric throughput and differential pressures are monitored. The mobility reduction or resistance factor is calculated using the following expression:

$$\text{mobility reduction} = \left(\frac{Q_w}{Q_p}\right) \left(\frac{P_p}{P_w}\right)$$

$Q_w$ = flow rate through core during initial brine injection
$Q_p$ = flow rate through core during polymer injection
$\Delta P_w$ = pressure drop across core during initial brine injection
$\Delta P_p$ = pressure drop across core during polymer injection.

A summary of the data is given in Table IV below:

TABLE IV
Injectivity & Mobility Control Properties

| Polymer Product | Injection Brine Solution | Viscosity-Nsm$^{-2}$ (cps) | Permeability, md | | Porosity (%) | Resistance Factor After Specified Pore Volumes Injected | | | | | | |
|---|---|---|---|---|---|---|---|---|---|---|---|---|
| | Copolymer Conc. (PPM) | | Air | Brine | | 1 | 2 | 3 | 4 | 5 | 7 | 10 |
| Ex. 2 | 500 | (2.9) $2.9 \times 10^{-3}$ | 397 | 342 | 20.1 | 3.5 | 3.8 | 3.8 | 3.8 | 3.8 | 3.8 | 3.8 |
| Ex. 4 | 500 | (3.9) $3.9 \times 10^{-3}$ | 375 | 329 | 20.1 | 9.4 | 10.6 | 10.8 | 11.0 | 11.2 | 11.2 | 11.2 |
| PAM(1) | 500 | (3.0) $3.0 \times 10^{-3}$ | 384 | 354 | 20.1 | 6.2 | 7.8 | 8.4 | 9.0 | 9.4 | 10.1 | 11.0 |

(1) High mol. wt. hydrolyzed polyacrylamide, solid grade, commercially available for use in enhanced oil recovery polymer floods.

It will be seen from the above data that the polymers of the present invention are characterized by a rapid development of mobility control followed by a long term steady state condition indicative of no plugging and good propagation through the rock. In contrast thereto, hydrolyzed polyacrylamide solution developed mobility control gradually and exhibited a continually increasing resistance, indicative of poor propagation and eventual plugging of the rock.

Example 9

This example illustrates enhanced oil recovery from oil-bearing cores employing the polymers of the instant invention and contrasting with a water flood per se on the same cores.

Core samples 3.8 cm (1.5 inches) in diameter and 10.2 cms (4 inches) long are sealed in thin lead sleeves with stainless steel screens on the ends. The samples are cleaned and dried and their air permeability and porosity measured. Next, they are saturated with Produced Water (having 5331 ppm total dissolved solids) and their permeability to this water is measured. The samples are then flushed with filtered, centrifuged crude oil (viscosity 0.11 $Nsm^{-2}$ or 110 cps) until low water saturations are attained and their permeability to oil is measured. A waterflood is performed on each sample using Injection Water (having 3415 ppm total dissolved solids) injected at a constant rate of approximately 1.2 m (4 feet) per day. Oil recovery and injection pressure are measured incrementally as a function of input volume. The samples are cleaned, reprepared as above, and flooded with polymer solutions. Results of these oil recovery tests are presented in Table V below:

TABLE V

Oil Recovery Tests

| | Test No. 1 – Ex. 4 | | Test No. 2 – Ex. 3 | |
|---|---|---|---|---|
| | Water Flood | Polymer(1) Flood | Water Flood | Polymer(2) Flood |
| Permeability to air, md. | 970 | 1040 | 1190 | 1140 |
| Porosity | 33.8 | 31.1 | 32.1 | 30.7 |
| Oil in Place, % pore space | 66.3 | 68.0 | 65.7 | 71.9 |
| Residual Oil Saturation, % pore space | 35.6 | 21.9 | 31.9 | 18.4 |
| Oil Recovered at water breakthrough, % pore space | 3.9 | 20 | 4.5 | 22.8 |
| Oil Recovered at 0.5 pore volume | 14 | 30 | 18 | 34 |
| Oil Recovered at 1.0 pore volume | 17 | 34 | 22 | 38 |
| Oil Recovered at 99.9% water cut, % pore space | 30.7 | 46.1 | 33.8 | 53.5 |
| Oil Recovered at 99.9% water cut, bbl/acre ft. | 783 | 1115 | 844 | 1278 |

(1) A solution of 3200 ppm of product emulsion of Example 4 in injection water.

(2) A solution of 4000 ppm of product emulsion of Example 3 in injection water.

It is clear from the above that both copolymer solutions of Examples 3 and 4 gave marked improvement in oil recovered over the corresponding water floods alone, yielding about double the amount of oil at 0.5 pore volume of injected solution.

Example 10

This example illustrates the low copolymer retention properties of the copolymers of the present invention. Sandpacks 3.5 cms (1—3/8 inches) in diameter and 45.7 cms (18 inches) long are prepared by packing the unconsolidated sand into rigid stainless steel tubes. Air permeability and porosity are measured. The samples were next saturated with Produced Water of Example 9 and their permeability to this water is measured. Next, they are flushed with filtered, centrifuged crude oil until a low water saturation is attained, and their permeability to oil is measured. A residual oil saturation is established by water-flooding the samples with Injection Water of Example 9, and the permeability to water at this saturation condition was measured. The sand pack is then injected with a solution containing 2000

ppm polymer product of Example 3 in Injection Water at a rate of 0.46 m (1.5 feet) per day and a second sand pack is injected with a solution containing 2000 ppm of product of Example 4 in Injection Water at a rate of 0.43 m (1.4 feet) per day, until effluent polymer concentrations greater than 95 per cent of the injection concentrations are observed. The samples are then injected at the same rates with solutions containing 4000 ppm of product of Example 3 and 4000 ppm of product of Example 4 respectively, until effluent polymer concentrations greater than 95 per cent of the injection concentrations are again attained. Finally, Injection Water is injected into each sample until the effluent polymer concentrations approaches 5 ppm. Numerous small effluent samples are collected and analyzed for polymer content. Injection pressures are also measured.

Curves showing the effluent polymer concentration as a function of fluid injected are prepared and graphically integrated to determine the amount of polymer in the effluent (the area under the curve) at several points. Polymer retention values obtained are given in Table VI. The values are low compared to the values of 0.04—0.11 kg $m^{-3}$ (100—300 pounds per acre foot) often reported for hydrolyzed polyacrylamide.

TABLE VI
Polymer Retention Data

| Product | Concentration (ppm) | Polymer Retention $kgm^{-3}$ (lbs/acre-foot) |
|---|---|---|
| Polymer (Example 3) | 2000 | 0.018 (48) |
| Polymer (Example 3) | 4000 | 0.022 (60) |
| Polymer (Example 4) | 2000 | 0.009 (24) |
| Polymer (Example 4) | 4000 | 0.016 (44) |

Example 11

The procedure of Example 6 is repeated in every detail except that a copolymer of acrylamide and sodium acrylate, rather than acrylamide ammonium acrylate copolymer as hereinabove defined, is employed. The rate is markedly inferior, less than 13 ml/min., and plugging occurs when 64 ml are collected after 24 minutes.

**Claims**

1. A process for recovering oil from a subterranean-oil-bearing formation which comprises: introducing through a well bore into said formation an aqueous flooding menstruum comprising an acrylamide-ammonium acrylate copolymer having a molecular weight above one million, and recovering oil therefrom, *characterized in that* said copolymer is prepared in the form of an emulsion comprising:

(*1*) an aqueous phase ranging from 70% to 95%, by weight, based on the total weight of (*1*) and (*2*) which is comprised of:

(a) a water-soluble copolymer having a molecular weight above one million of acrylamide and ammonium acrylate in an amount ranging from 27% to 68% of said copolymer, by weight, based on said aqueous phase, wherein said copolymer consists essentially of 50% to 75% acrylamide, by weight, and from 25% to 50% ammonium acrylate, by weight, said acrylate being derived from the substantially complete neutralization of acrylic acid with ammonia or ammonium hydroxide, and

(b) water in an amount ranging from 32% to 73%, by weight, based on the total weight of (*1*),

(*2*) a liquid hydrocarbon oil in an amount ranging from 5% to 30%, by weight, based on the total weight of (*1*) and (*2*),

(*3*) a water-in-oil emulsifying agent disposed between said aqueous phase and said liquid hydrocarbon at a concentration of 0.1% to 15.0%, by weight, based on the total weight of (*1*), (*2*) and (*3*), and optionally,

(*4*) an inverting hydrophilic surfactant of an ethoxylated octyl or an ethoxylated nonyl phenol, the amount of said ethoxylated octyl or nonyl phenol ranging from 1.5% to 2.5%, by weight, said weight being based on the total weight of (*1*), (*2*), (*3*) and (*4*).

2. A process according to Claim 1, wherein the pH of the neutralized acrylic acid in *1*(a) is 6.8.

3. A process according to Claim 1 or Claim 2, wherein said acrylamide-ammonium acrylate copolymer is prepared in the presence of from 0.1 to 10%, by weight, based on the total weight of the monomers, of propylene glycol.

4. A process according to any preceding claim, wherein the molecular weight of the copolymer is in the range from 4 x $10^6$ to 15 x $10^6$.

5. An emulsion adapted for use in the recovery of oil from subterranean oil-bearing formulations which comprises:

(1 an aqueous phase ranging from 70% to 95%, by weight, based on the total weight of (*1*) and (*2*) which is comprised of:

(a) a water-soluble copolymer having a molecular weight of above one million of acrylamide and ammonium acrylate in an amount ranging from 27% to 68% of said copolymer, by weight, based on said aqueous phase, wherein said copolymer consists essentially of from 50% to 75% acrylamide, by weight, and from 25% to 50% ammonium acrylate, by weight, said acrylate being derived from the substantially complete neutralization of acrylic acid with ammonia or ammonium hydroxide, and

(b) water in an amount ranging from 32% to 73%, by weight, based on the total weight of (*1*),

(*2*) a liquid hydrocarbon oil in an amount ranging from 5% to 30%, by weight, based on the total weight of (*1*) and (*2*),

(*3*) a water-in-oil emulsifying agent disposed between said aqueous phase and said liquid hydrocarbon at a concentration of 0.1% to 15.0%, by weight, based on the total weight of (*1*), (*2*) and (*3*), and optionally,

(*4*) an inverting hdyrophilic surfactant of an ethoxylated octyl or an ethoxylated nonyl phenol, the amount of said ethoxylated octyl or nonyl phenol ranging from 1.5% to 2.5%, by weight, said weight being based on the total weight of (*1*), (*2*), (*3*) and (*4*).

6. An emulsion according to Claim 5, wherein said acrylamide-ammonium acrylate copolymer is prepared in the presence of from 0.1 to 10%, by weight, based on the total weight of the monomers, of propylene glycol.

7. An emulsion according to Claim 5 or Claim 6, wherein the water-in-oil emulsifying agent is sorbitan monooleate.

8. An emulsion according to any one of Claims 5—7, wherein the inverting hydrophylic surfactant is ethoxylated octyl or nonyl phenol.

**Revendications**

1. Procédé de récupération d'huile d'une formation souterraine pétrolifère qui comprend l'introduction à travers un puits de forage dans ladite formation d'un dissolvant aqueux d'injection comprenant un copolymère acrylamide-acrylate d'ammonium ayant un poids moléculaire supérieur à un million et la récupération de l'huile à partir de celui-ci caractérisé en ce que ledit copolymère est préparé sous la forme d'une émulsion comprenant:

(1) une phase aqueuse de 70 à 95% en poids, par rapport au poids total de (1) et (2), constituée de:

(a) un copolymère soluble dans l'eau ayant un poids moléculaire supérieur à un million d'acrylamide et d'acrylate d'ammonium en une quantité comprise entre 27% et 68% en poids dudit copolymère par rapport à ladite phase aqueuse, ledit copolymère étant constitué essentiellement de 50% à 75% en poids d'acrylamide et de 25% à 50% en poids d'acrylate d'ammonium, ledit acrylate dérivant de la neutralisation pratiquement complète de l'acide acrylique par l'ammoniac ou l'hydroxyde d'ammonium, et

(b) de l'eau en une quantité comprise entre 32% et 73% en poids par rapport au poids total de (1).

(2) une huile hydrocarbonée liquide en une quantité comprise entre 5% et 30% en poids, par rapport au poids total de (1) et (2),

(3) un agent d'émulsification eau-dans-huile disposé entre ladite phase aqueuse et ledit hydrocarbure liquide à une concentration de 0,1% à 15,0% en poids par rapport au poids total de (1), (2) et (3), et éventuellement,

(4) un agent tensio-actif hydrophile inverseur constitué d'un octylphénol éthoxylé ou d'un nonylphénol éthoxylé, la quantité dudit octylphénol ou nonylphénol éthoxylé étant comprise entre 1,5% et 2,5% en poids, ce poids étant exprimé par rapport au poids total de (1), (2), (3) et (4).

2. Procédé selon la revendication 1 dans lequel le pH de l'acide acrylique neutralisé en 1 (a) est de 6,8.

3. Procédé selon la revendication 1 ou 2 dans lequel ledit copolymère acrylamide-acrylate d'ammonium est préparé en présence de 0,1 à 10% en poids, par rapport au poids total des monomères, de propylèneglycol.

4. Procédé selon l'une quelconque des revendications précédentes dans lequel le poids moléculaire du copolymère est compris dans la gamme de $4 \times 10^6$ à $15 \times 10^6$.

5. Emulsion adaptée à l'utilisation dans la récupération de l'huile des formations souterraines pétrolifères qui comprend:

(1) une phase aqueuse de 70 à 95% en poids par rapport au poids total de (1) et (2) constituée de:

(a) un copolymère soluble dans l'eau ayant un poids moléculaire supérieur à un million d'acrylamide et d'acrylate d'ammonium en une quantité comprise entre 27% et 68% en poids dudit copolymère par rapport à ladite phase aqueuse, ledit copolymère étant constitué essentiellement de 50% à 75% en poids d'acrylamide et de 25% à 50% en poids d'acrylate d'ammonium, ledit acrylate

dérivant de la neutralisation pratiquement complète de l'acide acrylique par l'ammoniac ou l'hydroxyde d'ammonium, et

(b) de l'eau en une quantité comprise entre 32% et 73% en poids par rapport au poids total de (1), (2) une huile hydrocarbonée liquide en une quantité comprise entre 5% et 30% en poids par rapport aù poids total de (1) et (2),

(3) un agent d'émulsification eau-dans-huile disposé entre ladite phase aqueuse et ledit hydrocarbure liquide à une concentration de 0,1% à 15,0% en poids par rapport au poids total de (1), (2) et (3), et éventuellement,

(4) un agent tensio-actif hydrophile inverseur constitué d'un octylphénol éthoxylé ou d'un nonylphénol éthoxylé, la quantité dudit octylphénol ou nonylphénol éthoxylé étant comprise entre 1,5% et 2,5% en poids, ce poids étant exprimé par rapport au poids total de (1), (2), (3) et (4).

6. Emulsion selon la revendication 5 dans laquelle ledit copolymère acrylamide-acrylate d'ammonium est préparé en présence de 0,1 à 10% en poids, par rapport au poids total des monomères, de propylèneglycol.

7. Emulsion selon la revendication 5 ou 6 dans laquelle l'agent émulsifiant eau-dans-huile est le monooléate de sorbitanne.

8. Emulsion selon l'une quelconque des revendications 5 à 7 dans laquelle l'agent tensio-actif hydrophile inverseur est l'octyl- ou le nonyl-phénol éthoxylés.

**Patentansprüche**

1. Verfahren zur Gewinnung von Öl aus einer unterirdischen ölführenden Formation, dadurch gekennzeichnet, daß man durch eine Bohrung in diese Formation ein wässriges Flutungsmittel mit einem Gehalt an einem Acrylamidammoniumacrylat Copolymeren mit einem Molekulargewicht von mehr als einer Million einführt und das Öl daraus gewinnt, dadurch gekennzeichnet, daß das Copolymere in Form einer Emulsion bereitet wird, welche folgendes umfaßt:

(1) 70—95 Gew.-% einer wässigren Phase bezogen auf das Gesamtgewicht von (1) und (2) mit

(a) einem wasserlöslichen Copolymer mit einem Molekulargewicht oberhalb einer Million aus Acrylamid und Ammoniumacrylat in einer Menge von 27—68 Gew.-% des Copolymeren bezogen auf die wässrige Phase wobei das Copolymere im wesentlichen aus 50—75 Gew.-% Acrylamid und 25—50 Gew.-% Ammoniumacrylat besteht, wobei das Acrylat durch im wesentlichen vollständige Neutralisation von Acrylsäure mit Ammoniak oder Ammoniumhydroxid gebildet wird und.

(b) Wasser in einer menge von 32—73 Gew.-% bezogen auf das Gesamtgewicht von (1)

(2) ein flüssiges Kohlenwasserstofföl ein einer Menge von 5—30 Gew.-% bezogen auf das Gesamtgewicht von (1) und (2),

(3) ein Wasser-in-Öl-Emulgiermittel zwischen der wässrigen Phase und dem flüssigen Kohlenwasserstoff in einer Konzentration von 0,1 bis 15,0 Gew.-% bezogen auf das Gesamtgewicht von (1), (2) und (3) und gegebenenfalls

(4) ein invertierendes hydrophiles oberflächenaktives Mittel in Form eines ethoxylierten Octylphenols oder eines ethoxylierten Nonylphenols, wobei die Menge des ethoxylierten Octylphenols oder Nonylphenols im Bereich von 1,5—2,5 Gew.-% bezogen aus das Gesamtgewicht von (1), (2), (3) und (4) liegt.

2. Verfahren rach Anspruch 1, dadurch gekennzeichnet, daß der pH der neutralisierten Acrylsäure in (1a) bei 6,8 liegt.

3. Verfahren nach Anspruch 1 oder 2, dadurch gekennzeichnet, daß das Acrylamid-Ammoniumacrylat-Copolymere in Gegenwart von 0,1—10 Gew.-% Propylenglykol bezogen auf das Gesamtgewicht der Monomeren bereitet wurde.

4. Verfahren nach einem der vorhergehenden Ansprüche, dadurch gekennzeichnet, daß das Molekulargewicht des Copolymeren im Bereich von 4 x $10^6$ bis 5 x $10^6$ liegt.

5. Emulsion für die Förderung von Öl aus unterirdischen ölführenden Formationen umfassend:

(1) 70—95 Gew.-% einer wässrigen Phase bezogen auf das Gesamtgewicht von (1) und (2) bestehend aus:

(a) einem wasserlöslichen Copolymer mit einem Molekulargewicht oberhalb einer Million aus Acrylamid und Ammoniumacrylat in einer Menge von 27—68 Gew.-% des Copolymeren bezogen auf die wässrige Phase, wobei das Copolymere im wesentlichen aus 50—75 Gew.-% Acrylamid und 25—50 Gew.-% Ammoniumacrylat besteht, wobei das Acrylat durch im wesentlichen vollständige Neutralisation von Acrylsäure mit Ammoniak oder Ammoniumhydroxid gebildet wird und

(b) Wasser in einer Menge von 32—73 Gew.-% bezogen auf das Gesamtgewicht von (1)

(2) ein flüssiges Kohlenwasserstofföl in einer Menge von 5—30 Gew.-% bezogen auf das Gesamtgewicht von (1) und (2),

(3) ein Wasser-in-Öl-Emulgiermittel zwischen der wässrigen Phase und dem flüssigen Kohlenwasserstoff in einer Konzentration von 0,1 bis 15,0 Gew.-% bezogen auf das Gesamtgewicht von (1), (2) und (3) und gegebenenfalls

(4) ein invertierendes hydrophiles oberflächenaktives Mittel in Form eines ethoxylierten Octylphenols oder eines ethoxylierten Nonylphenols, wobei die Menge des ethoxylierten Octylphenols oder Nonylphenols im Bereich von 1,5—2,5 Gew.-% bezogen auf das Gesamtgewicht von (1), (2), (3) und (4) liegt.

6. Emulsion nach Anspruch 5, dadurch gekennzeichnet, daß das Acrylamid-Ammoniumacrylat-Copolymere in Gegenwart von 0,1—10 Gew.-% Propylenglykol bezogen auf das Gesamtgewicht der Monomeren bereitet wurde.

7. Emulsion nach einem der Ansprüche 5 oder 6, dadurch gekennzeichnet, daß das Wasser-in-Öl-Emulgiermittel Sorbitanhydrid-Monooleat ist.

8. Emulsion nach einem der Ansprüche 5 bis 7, dadurch gekennzeichnet, daß das invertierende hydrophile oberflächenaktive Mittel ein ethoxyliertes Octylphenol oder Nonylphenol ist.